# EUROPÄISCHE PATENTSCHRIFT

(11) **EP 1 602 684 B1**
(45) Veröffentlichungstag und Bekanntmachung des Hinweises auf die Patenterteilung: **20.03.2013**
(21) Anmeldenummer: 05011440.4
(22) Anmeldetag: 27.05.2005
(51) Int. Cl.: C08J 9/16, C08J 9/18, C08J 9/00

(54) **Metallpartikel enthaltende Polyolefinschaumpartikel**
Polyolefin foam particles containing metal particles
Particules de mousse en polyoléfine contenant des particules métalliques

(30) Priorität: 02.06.2004 DE 102004027073
(43) Veröffentlichungstag der Anmeldung: 07.12.2005
(73) Patentinhaber: BASF SE, 67056 Ludwigshafen (DE)
(72) Erfinder: Braun, Frank, Dr., 67063 Ludwigshafen (DE); Fink, Günter, 67133 Maxdorf (DE); Thom, Arnd, 55232 Alzey (DE)

(56) Entgegenhaltungen:
- WO-A-99/20685
- DE-A1- 19 605 266
- DE-A1- 19 740 472
- US-A- 4 496 627

## Beschreibung

Die Erfindung betrifft expandierbare Polyolefinpartikel oder expandierte Polyolefinschaumpartikel, enthaltend 0,05 bis 30 Gew.-% Metallpartikel, sowie Verfahren zur Herstellung für Polyolefinpartikelschaumstoffe.

Expandierte Polypropylen (EPP)-Partikel werden in großtechnischem Maßstabe zur Herstellung von Schaumstoff-Formteilen eingesetzt. Diese werden vorwiegend als elastische, stoßfeste Verpackungsmaterialien eingesetzt, die darüber hinaus auch wärmedämmende Eigenschaften haben.

WO99/20685 beschreibt Mischungen enthaltend Interpolymere aus α-OlefinMonomeren mit einem oder mehreren Vinyl- oder Vinylidenmonomeren, einem oder mehreren leitfähigen Additiven und ggf. einem oder mehreren weiteren Polymeren, u. a. Polyolefinhomo- oder-copolymeren. Neben einigen anderen leitfähigen Additiven werden auch leitfähige Metalle oder Legierungen als geeignet beschrieben, gemäß Beispielen bevorzugt ist Ruß. Die Mischungen sind zur Herstellung schäumbarer oder geschäumter Körper geeignet.

Zur weiteren Verringerung der Wärmeleitfähigkeit können Infrarotstrahlung reflektierende Metallpigmente wie Aluminiumpulver (EP-A 0 790 273) oder Graphitpartikel (WO 00/37546) in den EPP-Partikeln eingearbeitet werden. Die daraus erhältlichen Schaumstoff-Formteile werden daneben auch aufgrund ihrer silber-grauen Farbe z.B für Anwendungen in der Automobilindustrie eingesetzt.

Zur Erzeugung von Grau bis Schwarztönen kann auch Ruß als Pigment in Kunststoffen eingesetzt werden. Allerdings ist die homogene Einarbeitung selbst bei geringen Rußmengen häufig unbefriedigend und führt nicht zu einem homogenen Grauton.

Von Polyolefinen ist bekannt, dass ihre Kristallisation von zahlreichen Pigmenten beeinflusst wird (Industrielle Organische Pigmente, Herbst/Hunger, 2.Aufl. 1995, S. 75), was zur Verschlechterung wichtiger anwendungstechnischer Eigenschaften, wie Verzugserscheinungen, Spannungen oder Schwindungsanomalien führen kann.

Aufgrund des hohen Preises oder der Beeinflussung der Kristallisation von Polyolefinen sind nicht alle Pigmente uneingeschränkt zur Einfärbung von Polyolefin-Schaumstoffen geeignet.

Aufgabe der vorliegenden Erfindung war es daher, den genannten Nachteilen abzuhelfen und pigmentierte Polyolefinschaumpartikel (EPP) mit homogenem Farbeindruck bereitzustellen, die sich insbesondere zu zwickelfreien Schaumstoff-Formteilen verschweißen lassen.

Demgemäß wurden die oben genannten expandierten Polyolefinpartikel (EPP) enthaltend 0,05 bis 30 Gew.-% Metallpartikel, gefunden, wobei erfindungswesentlich ist, daß das Polyolefin ein Randomcopolymer aus Propylen mit bis zu 15 Gew.-% Ethylen und/oder C₄-C₁₀-α-Olefin ist, keine weiteren Thermoplaste mit einer Glasübergangstemperatur unterhalb von 180°C zugemischt sind, als Metallpartikel Partikel aus elementarem Eisen enthalten sind, die Metallpartikel kugelförmig sind und die Metallpartikel einen mittleren Durchmesser von 0,1 bis 100 µm haben.

Bevorzugt enthalten die exandierten Polyolefinpartikel (EPP) 0,1 bis 20, besonders bevorzugt 1 bis 10 Gew.-% Metallpartikel. Die Metallpartikel bestehen aus Eisen.

Die Metallpartikel weisen einen mittleren Durchmesser im Bereich von 0,1 bis 100 µm, besonders bevorzugt im Bereich von 0,5 bis 50 µm auf. Sie sind kugelförmig.

Die erfindungsgemäßen expandierten Polyolefinpartikel lassen sich prinzipiell durch Suspensions- oder Extrusionsverfahren direkt oder indirekt über expandierbare Polyolefinpartikel und Verschäumen in einem Druckvorschäumer mit Wasserdampf oder Heißluft herstellen.

Beim Suspensionsverfahren wird das Polyolefin als ein Metallpartikel-haltiges Granulat mit Wasser, einem Suspensionshilfsmittel und dem Treibmittel in einem geschlossenen Reaktor bis über die Erweichungstemperatur des Granulats erhitzt. Dabei werden die Polymerpartikel mit dem Treibmittel imprägniert. Anschließend kann man entweder die heiße Suspension abkühlen, wobei sich die Partikel unter Einschluss des Treibmittels verfestigen und den Reaktor entspannen. Die auf diese Weise erhaltenen treibmittelhaltigen (expandierbaren) Partikel werden durch Erwärmen zu den expandierten Partikeln verschäumt, siehe z.B. WO 01/29119 und EP-A 1 281 729. Alternativ kann man die heiße Suspension ohne Abkühlen schlagartig entspannen (Explosionsexpansionsverfahren), wobei die erweichten, treibmittelhaltigen Partikel unmittelbar zu den expandierten Partikeln aufschäumen, siehe z.B. EP-A 53 333 und 611 795.

Beim Extrusionsverfahren wird das Polyolefin in einem Extruder unter Aufschmelzen mit den Metallpartikeln und einem Treibmittel vermischt, das dem Extruder zugeführt wird. Die treibmittelhaltige Mischung wird entweder unter solchen Druck- und Temperaturbedingungen ausgepresst und granuliert, dass das Polyolefingranulat nicht schäumt (expandiert), wozu beispielsweise eine Unterwassergranulierung verwendet wird, die bei einem Wasserdruck von mehr als 2 bar betrieben wird, siehe EP-A 1 132 420. Man erhält treibmittelhaltige, expandierbare Partikel, die durch anschließendes Erwärmen zu den expandierten Partikeln verschäumt werden. Alternativ kann man die Mischung auch ohne Überdruck auspressen und granulieren. Dabei schäumt der Schmelzestrang auf und man erhält durch Granulierung die expandierten Partikel, siehe EP-A 588 321 und DE-A 197 56 264.

Als Polyolefine sind insbesondere geeignet:
Randomcopolymere des Propylens mit 0,1 bis 15, bevorzugt 0,5 bis 12 Gew.-% Ethylen und/oder C₄₋₁₀-α-Olefin oder deren Mischungen. Besonders bevorzugte Randomcopolymere sind Copolymere von Propylen mit 0,5 bis 6 Gew.-% Ethylen oder mit 0,5 bis 15 Gew.-% But-1-en, oder ein Terpolymer aus Propylen, 0,5 bis 6 Gew.-% Ethylen und 0,5 bis 6 Gew.-% But-1-en,

Der Kristallitschmelzpunkt geeigneter Polyolefine liegt üblicherweise im Bereich von 90 bis 170°C. Er ist beispielsweise als Peakmaximum im Differential Scanning Calorimetry (DSC)-Diagramm bestimmbar. Die Schmelzwärme der Polyolefine ist ebenfalls per DSC bestimmbar und beträgt im allgemeinen 20 bis 300 J/g. Der Schmelzflussindex (MFI, melt flow index) des Polyolefins beträgt in der Regel 0,1 bis 100 g/10 min, ermittelt bei 230°C und 2,16 kg Belastung für Propylenpolymere bzw. 190°C und 2,16 kg Belastung für Ethylenpolymere, nach DIN 53 735.

Bevorzugte Polyolefine sind Copolymere des Propylens mit bis zu 15 Gew.% Ethylen und/oder But-1-en, besonders bevorzugt sind Propylen-Ethylen-Copolymere mit 1 bis 5 Gew.-% Ethylen. Sie weisen einen Kristallitschmelzpunkt von 130 bis 160°C, und eine Dichte von etwa 0,9 g/cm³, auf.

Die Polyolefine sind bekannt und können nach allen üblichen Verfahren erhalten werden, beispielsweise nach dem Hochdruck- (ICI), Mitteldruck- (Phillips), Niederdruck-(Ziegler), Gasphasen-, Gasphasenwirbelbett- oder Metallocen-Verfahren.

Das Polyolefin ist erfindungsgemäß mit keinem weiteren Thermoplasten mit einer Glasübergangstemperatur (bestimmbar z.B. als Wendepunkt im DSC-Diagramm) unterhalb von 180°C abgemischt. Solche Thermoplaste sind z.B. Polyamide in Mengen von 5 bis 40 Gew.-%, wobei der Mischung übliche Phasenvermittler, z.B. Blockcopolymerisate, wie Exxelor P 1015 (Fa. Exxon), zugesetzt werden können.

Dies ist insofern bevorzugt, als durch einen Fremdthermoplasten die Recyclierbarkeit des Polyolefins bzw. des daraus hergestellten Schaumstoffs leidet. Kautschukartige Ethylen-Propylen-Copolymerisate, die zur Elastifizierung zugesetzt werden können, zählen in diesem Sinne nicht zu den weiteren Thermoplasten.

Das Polyolefin kann als handelsübliches Granulat, Pulver, Grieß oder sonstiger Form eingesetzt werden. Zweckmäßigerweise wird ein Granulat eingesetzt. Geeignet ist z.B. ein sog. Minigranulat mit einem bevorzugten mittleren Durchmesser von 0,2 bis 10, insbesondere von 0,5 bis 5 mm. Dieses meist zylinderförmige oder runde Minigranulat wird hergestellt durch Extrudieren des Polyolefins, ggf. zusammen mit Metallpartikeln und/oder dem zuzumischenden Thermoplasten, und weiteren Zusatzstoffen, Auspressen aus dem Extruder, gegebenenfalls Abkühlen und Granulieren. Bei zylinderförmigem Minigranulat beträgt die Länge bevorzugt 0,2 bis 10, insbesondere 0,5 bis 5 mm. Das Granulat kann auch plättchenförmig geformt sein.

Die erfindungsgemäßen expandierbaren Polyolefinpartikel können nach dem Suspensionsverfahren oder nach dem Extrusionsverfahren hergestellt werden.

Beispielsweise kann man beim Suspensionsverfahren die Metallpartikel bei der Herstellung des Polyolefin-Minigranulats zugeben, d.h. das Minigranulat enthält bereits die Metallpartikel. Ebenso bevorzugt kann man beim Extrusionsverfahren die Metallpartikel in den Extruder, in dem auch das Treibmittel eingemischt wird, eindosieren. Die erfindungsgemäßen Metallpartikel können als solches, oder z.B. vermischt mit üblichen Dispergierhilfsmitteln, oder vermischt mit einem geringen Anteil Polymeren als sog. Masterbatch, zugefügt werden.

Je nach verwendetem Verfahren können die bevorzugten Treibmittel ggf. variieren. Beim Suspensionsverfahren verwendet man als Treibmittel bevorzugt organische Flüssigkeiten oder anorganische Gase oder Gemische davon. Als Flüssigkeiten kommen halogenierte Kohlenwasserstoffe in Frage, bevorzugt sind jedoch gesättigte, aliphatische Kohlenwasserstoffe, insbesondere solche mit 3 bis 8 C-Atomen. Besonders bevorzugt ist n-Butan. Geeignete anorganische Gase sind Stickstoff, Luft, Ammoniak oder Kohlendioxid.

Bei der Herstellung via Extrusionsverfahren verwendet man als Treibmittel bevorzugt flüchtige organische Verbindungen mit einem Siedepunkt bei Normaldruck 1013 mbar von -5 bis 150, insbesondere 25 bis 125°C. Gut geeignet sind Kohlenwasserstoffe (bevorzugt halogenfrei), insbesondere C₄₋₁₀-Alkane, beispielsweise die Isomere des Pentans, Hexans, Heptans und Octans, besonders bevorzugt s-Pentan. Geeignete Treibmittel sind außerdem sterisch anspruchsvollere Verbindungen wie Alkohole, Ketone, Ester, Ether und organische Carbonate. Bevorzugte Ketone sind 3,3-Dimethyl-2-butanon (= Pinakolon bzw. veraltet Pinakolin) und 4-Methyl-2-pentanon (= Methylisobutylketon). Als Ester kann man bevorzugt Isobutylacetat verwenden.

Auch Halogenkohlenwasserstoffe können verwendet werden, bevorzugt ist das Treibmittel jedoch halogenfrei. Geringe Anteile halogenhaltiger Treibmittel im Treibmittelgemisch sollen jedoch nicht ausgeschlossen werden. Es versteht sich, dass auch Mischungen der genannten Treibmittel verwendet werden können.

Die Treibmittelmenge beträgt bevorzugt 0,1 bis 40, insbesondere 0,5 bis 35 und besonders bevorzugt 1 bis 30 Gew.-Teile, bezogen auf 100 Gew.-Teile eingesetztes Polyolefin.

Als Nukleierungsmittel können beispielsweise Talkum, Wachse, insbesondere Polyolefinwachse wie z.B. Homo- oder Copolymere des Ethylens, außerdem Paraffine, Ruße, Graphitpulver, Kieselsäuren, bevorzugt pyrogene Kieselsäuren, weiterhin Zeolithe, Citronensäureester und Bentonite, insbesondere modifizierte Bentonite, oder deren Mischungen eingesetzt werden. Die Menge der Nukleierungsmittel beträgt bei der Herstellung via Suspension üblicherweise 0 bis 10, vorzugsweise 0 bis 5 Gew.-Teile, bezogen auf 100 Gew.-Teile expandierte Polyolefinpartikel.

Das erfindungsgemäße expandierte Polyolefin kann außerdem die üblichen Zusatzstoffe enthalten. Solche Zusatzstoffe sind z.B. Antioxidantien, Stabilisatoren, Flammschutzmittel, Wachse, Füllstoffe, Pigmente und Farbstoffe. Sie werden in üblichen, an sich bekannten Mengen verwendet.

Beim Suspensionsverfahren arbeitet man in der Regel absatzweise in einem Imprägnierbehälter, z.B. in einem Rührkesselreaktor. In den Reaktor werden das Polyolefin, z.B. als Metallpartikel-haltiges Minigranulat, eindosiert, außerdem Wasser bzw. ein anderes Suspensionsmedium, sowie das Treibmittel und ggf. ein Suspensionshilfsmittel. Als Suspensionshilfsmittel eignen sich wasserunlösliche anorganische Stabilisatoren, wie Tricalciumphosphat, Magnesiumpyrophosphat, Metallcarbonate; femer Polyvinylalkohol und Tenside, wie Natriumdodecylarylsulfonat. Sie werden üblicherweise in Mengen von 0,05 bis 10 Gew.-%, bezogen auf das Polyolefin, verwendet.

Danach wird der Reaktor verschlossen und der Reaktorinhalt auf eine Imprägniertemperatur von üblicherweise mindestens 100°C erhitzt. Die Treibmittel kann dabei vor, während oder nach dem Aufheizen des Reaktorinhalts zugefügt werden. Die Imprägniertemperatur sollte in der Nähe der Erweichungstemperatur des Polyolefins liegen. Bei Polypropylen sind Imprägniertemperaturen von 110 bis 180, insbesondere 130 bis 160°C bevorzugt.

Je nach Menge und Art des Treibmittels sowie nach der Höhe der Temperatur stellt sich im verschlossene Reaktor ein Druck (Imprägnierdruck) ein, der im allgemeinen 2 bis 100 bar (absolut) beträgt. Erforderlichenfalls kann man den Druck durch ein Druckregelventil oder Nachpressen von Treibmittel regulieren. Bei den Imprägnierbedingungen erhöhte Temperatur und Überdruck diffundiert Treibmittel in die Polymergranulatpartikel hinein. Die Imprägnierdauer beträgt im allgemeinen 0,5 bis 10 Stunden.

In einer Ausführungsform des Suspensionsverfahrens wird nach dem Imprägnieren die erhitzte Suspension auf üblicherweise unter 100°C abgekühlt, wodurch sich das Polyolefin wieder verfestigt und das Treibmittel einschließt. Danach wird entspannt. Man erhält expandierbare Polyolefinpartikel, die schließlich in üblicher Weise aus der Suspension abgetrennt werden. Anhaftendes Wasser wird in der Regel durch Trocknen z.B. im Stromtrockner, entfernt. Falls erforderlich kann man davor oder danach anhaftendes Suspensionshilfsmittel entfernen, indem man die Partikel mit einem geeigneten Reagens behandelt. Beispielsweise kann man mit einer Säure wie Salpetersäure, Salzsäure oder Schwefelsäure behandeln, um säurelösliche Suspensionshilfsmittel, z.B. Metallcarbonate oder Tricalciumphosphat, zu entfemen.

Die erhaltenen expandierbaren Polyolefinpartikel werden anschließend durch Erwärmen zu den expandierten Polyolefinpartikeln verschäumt, wie es weiter unten beschrieben wird.

In einer anderen Ausführungsform des Suspensionsverfahrens, auch Explosionsexpansionsverfahren oder Dokan-Verfahren (siehe EP-A 611 795) genannt, wird die erhitzte Suspension nicht abgekühlt, sondem heiß ohne Abkühlen schlagartig entspannt. Beim Entspannen expandiert das zuvor in die Polyolefinpartikel diffundierte Treibmittel "explosionsartig" und schäumt die erweichten Partikel auf. Man erhält expandierte Polyolefinpartikel.

Üblicherweise wird die Suspension durch eine Düse, ein Ventil oder eine andere geeignete Vorrichtung entspannt. Man kann die Suspension unmittelbar auf Atmosphärendruck, beispielsweise 1013 mbar, entspannen. Bevorzugt wird jedoch in einen Zwischenbehälter entspannt, dessen Druck zum Aufschäumen der Polyolefinpartikel ausreicht, jedoch über dem Atmosphärendruck liegen kann. Geeigneterweise entspannt man auf einen Druck von z.B. 0,5 bis 5, insbesondere 1 bis 3 bar (absolut). Während des Entspannens kann man im Imprägnierbehälter den Imprägnierdruck konstant halten, indem man Treibmittel nachpresst. Das zusätzliche Eindosieren anorganischer Gase, um bestimmte Anfangs- und Enddrucke einzuhalten wie in der DE-A 3431245, ist nicht erforderlich. In der Regel kühlt man die Suspension nach dem Entspannen ab, trennt die expandierten Polyolefinpartikel in üblicher Weise aus der Suspension ab, entfernt ggf. davor oder danach anhaftendes Suspensionshilfsmittel wie bereits beschrieben, und wäscht und trocknet schließlich die Partikel.

Beim Extrusionsverfahren werden dem Extruder das Polyolefin, das Treibmittel, die Metallpartikel und gegebenenfalls Nukleierungsmittel, und Zusatzstoffe gemeinsam (als Mischung) oder getrennt voneinander, an einer oder an verschiedenen Stellen des Extruders zugeführt. Dabei ist es möglich, jedoch nicht erforderlich, vorab aus den festen Komponenten eine Mischung herzustellen. Beispielsweise kann man zunächst Polyolefin, Metallpartikel, Nukleierungsmittel und ggf. Zusatzstoffe mischen und die Mischung dem Extruder zuführen, wonach dem Extruder das Treibmittel zugeführt wird, d.h. der Extruder mischt das Treibmittel in eine Polymerschmelze ein. Ebenso kann man dem Extruder eine Mischung von Treibmittel und Metallpartikel zuführen, d.h. die Metallpartikel erst mit dem Treibmittel zugeben.

Im Extruder werden die genannten Einsatzstoffe unter Aufschmelzen des Polyolefins vermischt. Als Extruder kommen alle üblichen Schneckenmaschinen in Betracht, insbesondere Einschnecken- und Doppelschneckenextruder (z.B. Typ ZSK von Fa. Werner & Pfleiderer), Ko-Kneter, Kombiplast-Maschinen, MPC-Knetmischer, FCM-Mischer, KEX-Knetschneckenextruder und Scherwalzenextruder, wie sie z.B. in Saechtling (Hg.), Kunststoff-Taschenbuch, 27. Auflage, Hanser-Verlag München 1998, Kap. 3.2.1 und 3.2.4, beschrieben sind. Der Extruder wird üblicherweise bei einer Temperatur betrieben, bei der das Polyolefin als Schmelze vorliegt, beispielsweise bei 130 bis 250, insbesondere 160 bis 220°C.

Drehzahl, Länge, Durchmesser und Ausgestaltung der Extruderschnecke(n), zugeführte Mengen und Extruderdurchsatz werden in bekannter Weise derart gewählt, dass im extrudierten Polyolefin die Metallpartikel, das Nukleierungsmittel und ggf. die Zusatzstoffe gleichmäßig verteilt sind.

In einer Ausführungsform des Extrusionsverfahrens stellt man expandierbare Partikel her. Um zu verhindern, dass die treibmittelhaltige Schmelze bereits beim Austritt aus dem Extruder aufschäumt, wird der Schmelzestrang bei solchen Temperatur- und Druckbedingungen ausgepresst und granuliert, dass praktisch kein Aufschäumen (Expandieren) erfolgt. Diese Bedingungen können nach Art und Menge der Polymere, der Zusatzstoffe und insbesondere des Treibmittels verschieden sein. Die optimalen Bedingungen lassen sich durch Vorversuche einfach ermitteln.

Eine technisch günstige Methode ist die Unterwassergranulierung in einem Wasserbad, das eine Temperatur unter 100°C aufweist und unter einem Druck von mindestens 2 bar (absolut) steht. Die Temperatur darf nicht zu tief sein, da sonst die Schmelze an der Düsenplatte erstarrt, und sie darf nicht zu hoch sein, da sonst die Schmelze expandiert. Je höher der Siedepunkt des Treibmittels und je geringer die Treibmittelmenge ist, desto höher kann die Wassertemperatur und desto niedriger kann der Wasserdruck sein. Bei dem besonders bevorzugt Treibmittel s-Pentan liegt die optimale Wasserbadtemperatur bei 30 bis 60°C und der optimale Wasserdruck bei 8 bis 12 bar (absolut). Statt Wasser kann man auch andere geeignete Kühlmedien verwenden. Ebenso kann man eine Wasserringgranulierung anwenden. Dabei ist der Schneidraum derart eingekapselt, dass die Granuliervorrichtung unter Druck betrieben werden kann.

Man erhält auf diese Weise expandierbare Polyolefinpartikel, die anschließend vom Wasser abgetrennt und ggf. getrocknet werden. Danach werden sie zu expandierten Polyolefinpartikeln verschäumt wie weiter unten beschrieben.

In einer anderen Ausführungsform des Extrusionsverfahrens wird die treibmittelhaltige Schmelze ohne Unterwassergranulierung, Wasserringgranulierung oder sonstige Vorkehrungen, die ein Schäumen verhindern, ausgepresst und granuliert. Beispielsweise kann man direkt in die Atmosphäre auspressen. Dabei schäumt der ausgepresste Schmelzestrang auf, und durch Granulieren des aufgeschäumten Strangs erhält man expandierte Polyolefinpartikel.

Bevorzugte Verfahren zur Herstellung von expandierbaren Polyolefinpartikeln umfassen die Stufen:
a) Aufschmelzen von Polyolefin mit 0,05 bis 30 Gew.-% Metallpartikel und Extrusion zu Minigranulat mit einem mittleren Durchmesser von 0,2 bis 10 mm,
b) Imprägnieren des Minigranulates mit 0,1 bis 40 Gew.-% eines flüchtigen Treibmittels in wässriger Suspension unter Druck bei Temperaturen im Bereich von 100 bis 160°C und Abkühlen der Suspension auf 20 bis 95°C,
c) anschließendem Entspannen.

Ein bevorzugtes Verfahren zur Herstellung von expandierten Polyolefinschaumpartikeln (EPP) umfasst die Stufen
a) Aufschmelzen von Polyolefin mit 0,05 bis 30 Gew.-% Metallpartikel und Extrusion zu Minigranulat mit einem mittleren Durchmesser von 0,2 bis 10 mm,
b) Imprägnieren des Minigranulates mit 0,1 bis 40 Gew.-% eines flüchtigen Treibmittels in wässriger Suspension unter Druck bei Temperaturen im Bereich von 100 bis 160°C und
c) anschließendem Entspannen.

Sofern man expandierbare Partikel erhält, werden diese in an sich bekannter Weise aufgeschäumt (verschäumt), wobei die erfindungsgemäßen expandierten Polyolefinpartikel entstehen. Das Verschäumen erfolgt in der Regel durch Erwärmen der expandierbaren Partikel in üblichen Verschäumungsvorrichtungen, z.B. mit Heißluft oder überhitztem Wasserdampf in einem sog. Druckvorschäumer, wie er zur Verarbeitung von expandierbarem Polystyrol (EPS) üblich ist. Bevorzugt verschäumt man die Partikel bei einer Temperatur, bei der sie erweichen (Erweichungsbereich), z.B. bei Temperaturen von 100 bis 180°C.

Verschäumt man mit Wasserdampf, so beträgt je nach Art und Menge von Polyolefin und Treibmittel, und der gewünschten Dichte des herzustellenden Schaums, der Druck des Wasserdampfs üblicherweise 2 bis 8, bevorzugt 1 bis 5 bar (absolut). Dabei ergeben höhere Drucke geringere Dichten des verschäumten Polyolefins, d.h. mit dem Wasserdampfdruck kann man die gewünschte Dichte einstellen. Die Dauer des Verschäumens beträgt üblicherweise 1 bis 300, bevorzugt 1 bis 30 sec. Nach dem Verschäumen wird entspannt und abgekühlt. Bevorzugt beträgt der Expansionsfaktor beim Verschäumen 2 bis 50.

Die Polyolefinpartikel können vor und/oder nach dem Verschäumen mit einem Antiblockingmittel versehen werden. Geeignete Antiblockingmittel sind z.B. Talkum, Metallverbindungen wie Tricalciumphosphat, Calciumcarbonat, Kieselsäuren, insbesondere pyrogene Kieselsäuren wie Aerosil® von Fa. Degussa, Salze langkettiger (z.B. C₁₀₋₂₂) Carbonsäuren, beispielsweise Stearinsäuresalze wie Calciumstearat, Ester langkettiger Carbonsäuren, z.B. Glycerinester wie die Glycerinstearate, und Silikonöle. Das Antiblockingmittel wird in der Regel durch Mischen, Aufsprühen, Auftrommeln oder andere übliche Verfahren auf die Partikel aufgebracht. Es wird üblicherweise in Mengen von 0,01 bis 20, bevorzugt 0,1 bis 10, besonders bevorzugt 0,5 bis 6 Gew.-Teilen, bezogen auf 100 Gew.-Teile des Polyolefins, verwendet.

Man erhält in jedem Falle expandierte Polyolefinpartikel mit einer geringen Schüttdichte. Sie beträgt erfindungsgemäß maximal 70 g/l, insbesondere mindestens 5 g/l. Bevorzugte Schüttdichten liegen bei 10 bis 70 g/l, und besonders bevorzugt 15 bis 60 g/l.

Die expandierten Partikel sind in der Regel zumindest annähernd kugelförmig und weisen üblicherweise einen Durchmesser von 0,2 bis 20, bevorzugt 0,5 bis 15 und insbesondere 1 bis 12 mm auf. Bei nicht kugelförmigen, z.B. länglichen oder zylinderförmigen Partikeln, ist mit Durchmesser die längste Abmessung gemeint.

Aus den erfindungsgemäßen Polyolefinpartikeln kann man Schaumstoffe herstellen, beispielsweise indem man sie in einer geschlossenen Form unter Wärmeeinwirkung miteinander verschweißt. Dazu füllt man die Partikel in die Form und leitet nach Schließen der Form Wasserdampf oder Heißluft ein, wodurch die Partikel weiter expandieren und miteinander zum Schaumstoff verschweißen. Die Schaumstoffe können Halbzeuge sein, beispielsweise Platten, Profile oder Bahnen, oder fertige Formteile mit einfacher oder komplizierter Geometrie. Demnach schließt der Begriff Polyolefin-Schaumstoff, Schaumstoffhalbzeuge und Schaumstoff-Formteile ein.

Gegenstand der Erfindung ist daher auch die Verwendung der expandierten Polyolefinpartikel zur Herstellung von Polyolefin-Schaumstoffen, sowie Polyolefin-Schaumstoffe, erhältlich aus den expandierten Polyolefinpartikeln.

### Beispiel:

In einem Zweischneckenextruder wurden bei 220°C
- 97,8 Gew.-% eines Propylen-Randomcopolymers enthaltend ca. 2 Gew.-% Ethylen, mit einer Melt Flow Rate (ISO 1133) von 8,0 g/10 min bei 230°C und 2,16 kg Belastung,
- 0,1 Gew.-% des Antioxidans Pentaerythritol-tetrakis[3-(3,5-di-tert-butyl-4-hydroxyphenyl)propionat]; es wurde das Handelsprodukt Irganox® 1010 von Ciba Specialty Chemicals verwendet,
- 0,1 Gew.-% des Gleitmittels Calciumstearat, und
- 2 Gew.-% Eisenpartikel (Carbonyleisenpulver OM von BASF) verwendet
unter Aufschmelzen des Propylenpolymers vermischt, extrudiert, und das abgekühlte, erstarrte Extrudat mit einem üblichen Granulator zu einem zylinderförmigen Minigranulat zerkleinert. Der Durchmesser des Granulats betrug 0,8 bis 1,2 mm, die Länge 2,0 bis 2,3 mm.

In einem geschlossenen Rührkessel wurden unter Rühren 100 kg des erhaltenen Minigranulats und 6,7 kg Tricalciumphosphat in 245 kg Wasser bei 20°C dispergiert. Nach Zugabe von 20 kg n-Butan erhitzte man den Reaktorinhalt innerhalb 75 min auf 132°C, wobei sich ein Druck von ca. 19 bar (absolut) einstellte. Nach Erreichen dieser Endtemperatur entspannte man den Reaktorinhalt durch eine im Reaktorboden befindliche Düse in einen Zwischenbehälter. Die erhaltenen expandierten Polypropylenpartikel wurden abgetrennt und das Tricalciumphosphat wurde durch Behandeln mit Salpetersäure entfernt. Anschließend wurden die Partikel gewaschen und im Stromtrockner getrocknet. Die Schüttdichte der erhaltenen expandierten Partikel betrug 27,0 g/l.

## Patentansprüche

1. Expandierbare Polyolefinpartikel oder expandierte Polyolefinschaumpartikel, enthaltend 0,05 bis 30 Gew.-% Metallpartikel, **dadurch gekennzeichnet, dass** das Polyolefin ein Randomcopolymer aus Propylen mit bis zu 15 Gew.% Ethylen und/oder C₄-C₁₀-α-Olefin ist, keine weiteren Thermoplaste mit einer Glasübergangstemperatur unterhalb von 180°C zugemischt sind, als Metallpartikel Partikel aus elementarem Eisen enthalten sind, die Metallpartikel kugelförmig sind und die Metallpartikel einen mittleren Durchmesser von 0,1 bis 100 µm haben.

2. Expandierbare Polyolefinpartikel oder expandierte Polyolefinschaumpartikel, nach Anspruch 1, **dadurch gekennzeichnet, dass** sie 1 bis 10 Gew.-% Metallpartikel enthalten.

3. Formteile aus Polyolefinpartikelschaumstoff, erhältlich durch Verschweißen von Polyolefinschaumpartikel gemäß einem der Ansprüche 1 bis 2 mit Heißluft oder Wasserdampf.

4. Verfahren zur Herstellung von expandierbaren Polyolefinpartikeln gemäß den Ansprüchen 1 bis 2, umfassend die Stufen
a) Aufschmelzen von Polyolefin mit 0,05 bis 30 Gew.-% Metallpartikel und Extrusion zu Minigranulat mit einem mittleren Durchmesser von 0,2 bis 10 mm,
b) Imprägnieren des Minigranulates mit 0,1 bis 40 Gew.-% eines flüchtigen Treibmittels in wässriger Suspension unter Druck bei Temperaturen im Bereich von 100 bis 160°C und Abkühlen der Suspension auf 20 bis 95°C und
c) anschließendem Entspannen.

5. Verfahren zur Herstellung von expandierten Polyolefinschaumpartikeln (EPP) gemäß den Ansprüchen 1 bis 2, umfassend die Stufen
a) Aufschmelzen von Polyolefin mit 0,05 bis 30 Gew.-% Metallpartikel und Extrusion zu Minigranulat mit einem mittleren Durchmesser von 0,2 bis 10 mm,
b) Imprägnieren des Minigranulates mit 0,1 bis 40 Gew.-% eines flüchtigen Treibmittels in wässrigerer Suspension unter Druck bei Temperaturen im Bereich von 100 bis 160°C und
c) anschließendem Entspannen.

6. Verfahren zur Herstellung von expandierten Polyolefinschaumpartikeln (EPP), **dadurch gekennzeichnet, dass** man expandierbare Polyolefinschaumpartikel nach dem Verfahren gemäß Anspruch 4 herstellt und in einem Druckvorschäumer mit Wasserdampf oder Heißluft vorschäumt.

## Claims

1. Expandable polyolefin particles or expanded polyolefin foam particles comprising from 0.05 to 30% by weight of metal particles, wherein the polyolefin is a random copolymer of propylene with up to 15% by weight of ethylene and/or C₄-C₁₀-α-olefin, no further thermoplastics having a glass transition temperature below 180°C are added, the metal particles present are particles of elemental iron, the metal particles are spherical and the metal particles have a mean diameter from 0.1 to 100 µm.

2. Expandable polyolefin particles or expanded polyolefin foam particles according to claim 1 which comprise from 1 to 10% by weight of metal particles.

3. A molding comprising expanded polyolefin foam and obtainable by fusing together of polyolefin foam particles according to either of claims 1 and 2 by means of hot air or steam.

4. A process for producing expandable polyolefin particles according to either of claims 1 and 2, which comprises the steps
a) melting of polyolefin with from 0.05 to 30% by weight of metal particles and extrusion to form minipellets having a mean diameter of from 0.2 to 10 mm,
b) impregnation of the minipellets with from 0.1 to 40% by weight of a volatile blowing agent in aqueous suspension under superatmospheric pressure at temperatures in the range from 100 to 160°C and cooling of the suspension to from 20 to 95°C and
c) subsequent depressurization.

5. A process for producing expanded polyolefin foam particles according to either of claims 1 and 2, which comprises the steps
a) melting of polyolefin with from 0.05 to 30% by weight of metal particles and extrusion to form minipellets having a mean diameter of from 0.2 to 10 mm,
b) impregnation of the minipellets with from 0.1 to 40% by weight of an volatile blowing agent in aqueous suspension under superatmospheric pressure at temperatures in the range from 100 to 160°C and
c) subsequent depressurization.

6. A process for producing expanded polyolefin foam particles, which comprises producing expandable polyolefin foam particles by the process according to claim 4 and prefoaming them by means of steam or hot air in a pressure prefoamer.

## Revendications

1. Particules de polyoléfine expansibles ou particules de mousse de polyoléfine expansées, contenant 0,05 à 30 % en poids de particules métalliques, **caractérisées en ce que** la polyoléfine est un copolymère aléatoire de propylène contenant jusqu'à 15 % en poids d'éthylène et/ou d'une α-oléfine en C₄-C₁₀, aucun thermoplastique supplémentaire ayant une température de transition vitreuse inférieure à 180 °C n'est incorporé, des particules de fer élémentaire sont contenues en tant que particules métalliques, les particules métalliques sont sphériques et les particules métalliques ont un diamètre moyen de 0,1 à 100 µm.

2. Particules de polyoléfine expansibles ou particules de mousse de polyoléfine expansées selon la revendication 1, **caractérisées en ce qu'**elles contiennent 1 à 10 % en poids de particules métalliques.

3. Pièces moulées en mousse de particules de polyoléfine, pouvant être obtenues par soudage de particules de mousse de polyoléfine selon l'une quelconque des revendications 1 à 2 avec de l'air chaud ou de la vapeur d'eau.

4. Procédé de fabrication de particules de polyoléfine expansibles selon les revendications 1 à 2, comprenant les étapes suivantes :
a) la fusion d'une polyoléfine contenant 0,05 à 30 % en poids de particules métalliques et l'extrusion en un mini-granulat ayant un diamètre moyen de 0,2 à 10 mm,
b) l'imprégnation du mini-granulat avec 0,1 à 40 % en poids d'un agent gonflant volatil en suspension aqueuse sous pression à des températures dans la plage allant de 100 à 160 °C, et le refroidissement de la suspension à une température de 20 à 95 °C, puis
c) la détente.

5. Procédé de fabrication de particules de mousse de polyoléfine expansées (EPP) selon les revendications 1 à 2, comprenant les étapes suivantes :
a) la fusion d'une polyoléfine contenant 0,05 à 30 % en poids de particules métalliques et l'extrusion en un mini-granulat ayant un diamètre moyen de 0,2 à 10 mm,
b) l'imprégnation du mini-granulat avec 0,1 à 40 % en poids d'un agent gonflant volatil en suspension aqueuse sous pression à des températures dans la plage allant de 100 à 160 °C, puis
c) la détente.

6. Procédé de fabrication de particules de mousse de polyoléfine expansées (EPP), **caractérisé en ce que** des particules de mousse de polyoléfine expansibles sont fabriquées par le procédé selon la revendication 4 et prémoussées dans un prémousseur sous pression avec de la vapeur d'eau ou de l'air chaud.
